# EUROPEAN PATENT APPLICATION

(11) **EP 3 760 565 A1**
(43) Date of publication of application: **06.01.2021**
(21) Application number: 19184684.9
(22) Date of filing: 05.07.2019
(51) Int. Cl.: B66B 11/04, H02K 29/03, H02K 41/03, H02N 15/00

(54) **ELECTRIC LINEAR MOTOR**

(71) Applicant: KONE Corporation, 00330 Helsinki (FI)
(72) Inventor: KORHONEN, Tuukka, 00330 Helsinki (FI)
(74) Representative: Glück Kritzenberger Patentanwälte PartGmbB

(57) **Abstract**

The invention relates to an electric linear motor for a transport system, the electric linear motor being formed by at least one linear stator rail (26a,b, 28a,b) with stator poles (52; 74, 78) being located in a fixed correlation to an environment, and at least one mover (22, 24) co-acting and moving along the stator rail (26a,b, 28a,b), the linear stator rail (26a,b, 28a,b) comprising at least one horizontal stator rail (28a,b), having upper stator poles (74) extending upwards from the horizontal stator rail (28a,b) and lower stator poles (78) extending downwards from the horizontal stator rail (28a,b). According to the invention at least one of the physical characteristic of the upper stator poles (74) differs from that of the lower stator poles (78), as to cope with gravitational forces acting on the mover in normal direction of the horizontal stator rail.

## Description

The present invention relates to an electric linear motor for a transport system like an elevator, escalator, moving ramp or the like. The electric linear motor is formed by at least one linear stator rail with stator poles being located in a fixed correlation to an environment and at least one mover co-acting and moving along the stator rail. The electric linear motor comprises at least one linear horizontal stator rail extending in a horizontal trajectory of the mover, which horizontal stator rail comprises upper stator poles extending upwards from the stator rail and lower stator poles extending downwards from the stator rail.

It is object of the present invention to provide an electric linear motor having an improved efficiency.

The invention is solved with an electric linear motor according to claim 1. Preferred embodiments of the invention are subject-matter of the corresponding dependent claims. The invention also refers to an elevator having such a motor as well as an escalator or moving ramp comprising such a linear motor.

According to the invention, the physical characteristics of the upper stator poles of the horizontal stator rail differ from those of the lower stator poles.

In the case of passenger transport systems, particularly elevators and escalators, the electric linear motor regularly takes up the gravitational force acting on the elevator car or on the pallets moving in an endless chain in an escalator or moving ramp. Thus, the linear motor does not only operate for the propulsion of the elevator car or of the pallets of the escalator or moving ramp but also has to bear with the gravitational force which in the horizontal movement part of an elevator or in the horizontal and/or inclined trajectory of an escalator is more or less normal to the length direction of the stator rail. Thus, in these parts of the transport system, the linear motor has additionally to cope with the gravitational force acting in normal direction of the stator rail. Via using a stator rail wherein the physical characteristics of the upper stator poles is different from those of the lower stator poles, the linear motor can be configured to better be able to bear gravitational forces acting in normal direction of the stator rail by exerting a higher force on the mover in upwards direction which corresponds to a higher attraction of the mover to the lower part of the stator rail.

The invention thus considers the fact that in a multicar system a linear motor is regularly used for propelling elevator cars in vertical direction, as well as for transferring cars in horizontal direction from one shaft to another, the required drive properties for vertical and horizontal movement of the mover/car are different. In vertical movement propulsion force acts against gravity. As multi-car system is an elevator system without a counterweight, the propulsion force required for upwards direction is always higher than for downwards direction. Thus the vertical stator rail can be optimized for example by providing an asymmetric stator teeth structure.

On the other hand in the horizontal trajectory of the elevator or of an escalator or moving walk the propulsion force of the mover is smaller, but the normal force in transverse direction (in a direction perpendicular to the propulsion force) is greater as gravity acts in the direction of the normal force.

According to the present invention, one or more physical properties of the horizontal stator rail are asymmetric in upwards and downwards direction, i.e. with respect to a horizontal plane. Further, in an elevator the physical properties of the horizontal stator rail are also different from one or more physical properties of the vertical stator rail. In portion of vertical movement the stator teeth of the vertical stator rail may be inclined from perpendicular direction, to provide more propulsion force in upwards direction against gravity. In portion of horizontal movement, i.e. in the horizontal stator rail the stator teeth may be straight, extending from stator rail in perpendicular direction. Straight teeth configuration provides more normal force than angled teeth configuration, to better compensate the effect of gravity acting on the mover (normal force is here the attractive force between stator segment and rotor segment facing said stator segment).

The configuration of the mover is of course the same for both vertical and horizontal movement portions as one and the same mover is running on both. This can mean that the tooth/pole pitch of the horizontal and vertical stator rail is the same, but the shape of the teeth varies.

Preferably, the lower stator poles can be made of a different material and/or geometrical shape. Thus, the lower poles may be made from a material that leads to a better attraction between stator and mover. Additionally or alternatively they may have different shape, i.e. generally larger, than the upper stator poles. Via this measure, the pulling force acting between the stator rail and the lower parts of a mover is larger than the force between the stator rail and the upper part of the mover and thus the mover is better able to cope with the loads imposed on it and acting in normal direction of the stator rail. Thus, the suspension function of the mover for example in connection with an elevator car or with pallets of a passenger conveyor is essentially improved.

Preferably, the width and/or height of the upper stator poles is lower than the width and/or height of the lower stator poles. By this measure, the pulling force on the lower mover part is higher than the pulling force on the upper mover part which leads to a good ability of the linear motor to bear forces in normal direction. The same effect can be achieved when the material of the upper stator poles differs from that of the lower stator poles. Accordingly, for example the material of the lower stator poles may be of a more ferromagnetic material than the upper ones. If the stator poles are formed by permanent magnets the permeability of the lower permanent magnets may be higher than that of the upper permanent magnets. All these measures lead separately or particularly in combination to a better ability of the linear motor to suspend forces acting on the mover an elevator imposed by gravitational force of the car or pallet(s) of escalators or moving ramps or sidewalks.

Preferably, alternatively or additionally, the upper stator poles may have - particularly longitudinal - extra grooves to increase the magnetic reluctance.

In a preferred embodiment of the invention, the stator poles are spaced apart stator teeth made of iron and/or permanent magnetic material. Such a stator rail is comparably easy to manufacture and the properties of the corresponding stator rail can easily be defined.

Preferably, the horizontal stator rail comprises upper gaps between the upper stator poles and lower gaps between the lower stator poles and the width ratio between the upper stator poles and the upper gaps is lower than the width ratio between the lower stator poles and the lower gaps. Also this measure allows an easy definition of the force difference between the mover and the upper side and lower side of the stator as to cope with gravitational forces acting on the mover in normal direction of the stator rail.

It has been revealed that a width ratio between the upper stator poles and the upper gaps between 0.2 and 0.6, preferably between 0.3 and 0.5, is preferable and leads to good results. In the same way, the width ratio between the lower stator poles and the lower gaps has revealed as advantageous if being between 0.7 and 1.5, preferably between 0.8 and 1.2.

In a preferred embodiment of the invention, the vertical cross section of the surface between the upper stator poles forming the upper gaps is smooth, i.e. is differentiable. Via this measure, harmonics during the operation of the linear motor are avoided and a better efficiency and a lower operating noise is achieved.

Preferably, the width of the upper stator poles is between 5 and 10 mm, particularly between 6 and 9 mm, while the width of the lower stator poles is preferably between 10 mm and 15 mm, particularly between 11 and 13 mm. These geometries leads to good results in compensating for gravitational forces acting on the mover which rides along the horizontal stator rail.

In a preferred embodiment of the invention, the horizontal stator rail is formed of a separate upper stator rail part comprising the upper stator poles and a separate lower stator rail part comprising the lower stator poles, which upper and lower stator rail parts are connected to each other. Via this measure, the material properties can easily be chosen different between the upper stator poles and the lower stator poles.

Preferably, the horizontal stator rail is made of iron, such as electrical steel, or contains iron which is a typical reliable stator rail construction of a linear motor.

In a preferred embodiment of the invention, the stator rail consists of successive stator rail parts which are connected end to end, which stator rail parts have a length of at least 1 m, preferably at least 2 m. Via this measure, a long stator rail of several tenth of meters can easily be built by the successive stator rail parts.

The invention also refers to an elevator comprising at least one, particularly several linear motors wherein the at least one stator rail of the linear motor defines a trajectory of an elevator car, which trajectory has a vertical portion and a horizontal portion. The horizontal stator part of the linear motor is embodied according to one of the above-mentioned inventive embodiments. Particularly, in an elevator there is a horizontal stator rail and a vertical stator rail. As with the vertical stator rail, the gravitational forces acting on the mover are acting parallel to the stator rail, there is no need to provide different characteristics of the stator poles on different sides of the stator rail. On the other side, the elevator comprises a horizontal stator part in which the gravitational forces acting on the mover are normal to the stator rail. In this horizontal part of the elevator, the horizontal stator rail has to bear the complete suspension of the elevator car side of the propulsion in movement direction. Thus, the configuration of the horizontal stator rail according to the above-mentioned inventive embodiments better copes with this suspension function of the horizontal stator rail.

Of course, the overall geometry of the vertical stator rail and the horizontal stator rail is identical as one and the same mover is used for riding on the vertical stator rail and the horizontal stator rail. In the vertical stator rail, the physical properties of the stator poles extending in different directions are preferably identical which leads to a more economical manufacture of the vertical stator rails.

The invention also refers to an escalator or moving ramp comprising a linear motor, wherein the at least one stator rail of the linear motor comprises a horizontal stator rail defining a horizontal trajectory of an endless conveyor element comprising pallets, i.e. in case of a moving walk. Possibly it also comprises an inclined stator rail in an inclined trajectory extending in an angle obtuse with respect to the horizontal stator rail, i.e. in case of an escalator or moving ramp. At least the horizontal stator rail, but possibly also the inclined stator rail is configured according to the invention with different physical properties in up and down direction.

In a preferred embodiment of the inventive escalator, also the properties between the upper and the lower stator poles of the inclined stator rail are different. In this case, preferably the difference between the physical properties of the upper and lower stator poles is lower in the inclined stator rail than in the horizontal stator rail. Preferably, the difference value between the physical properties of the upper and lower stator poles of the inclined stator rail is dependent on the value of the angle between the horizontal and inclined stator rail. As in the inclined stator rail, the gravitational forces acting on the mover do not exactly extend in normal direction but in an inclined direction, the difference of the physical characteristics between the upper and lower stator poles can be reduced with respect to a stator rail extending exactly horizontally. If according to the above-mentioned preferred embodiment, the difference value corresponds to the angle of inclination between the horizontal and inclined stator rail, or between the inclined stator rail and the horizontal plane the difference between the upper and lower stator poles can be made equivalent to the force portion acting in normal direction of the stator rail.

In a preferred embodiment of the invention, the horizontal stator rail is implemented without upper stator poles extending upwards from the horizontal stator rail. This is possible when the attraction force between lower stator poles and mover is dimensioned to compensate the effect of gravity.

It is obvious for the skilled person that the above-mentioned embodiments can be mixed arbitrarily with each other.

Following terms are used as a synonym: stator pole - stator tooth - tooth; normal - perpendicular - 90 degrees;
The invention is now described in greater detail in connection with the enclosed drawings. In these show:
- Fig. 1: a side view of an elevator with two elevator shafts having linear motors with vertical and horizontal stator rails acting together with movers pivoted at several elevator cars moving in those shafts,
- Fig. 2: a horizontal cross-section in the corner area between the elevator shaft and the elevator car showing a linear motor comprising a rotatable stator rail part co-acting with a rotatably pivoted mover of the elevator car,
- Fig. 3: a vertical stator rail co-acting with a mover of the elevator car,
- Fig. 4: a vertical schematic drawing indicating a linear FSPM mover co-acting with a stator rail having downwards inclined stator teeth,
- Fig. 5: an enlarged vertical side view of a vertical stator rail comprising curved and downwards extending stator teeth, and
- Fig. 6: a horizontal stator rail with a different geometry of upper and lower stator teeth working together with an FSPM mover.

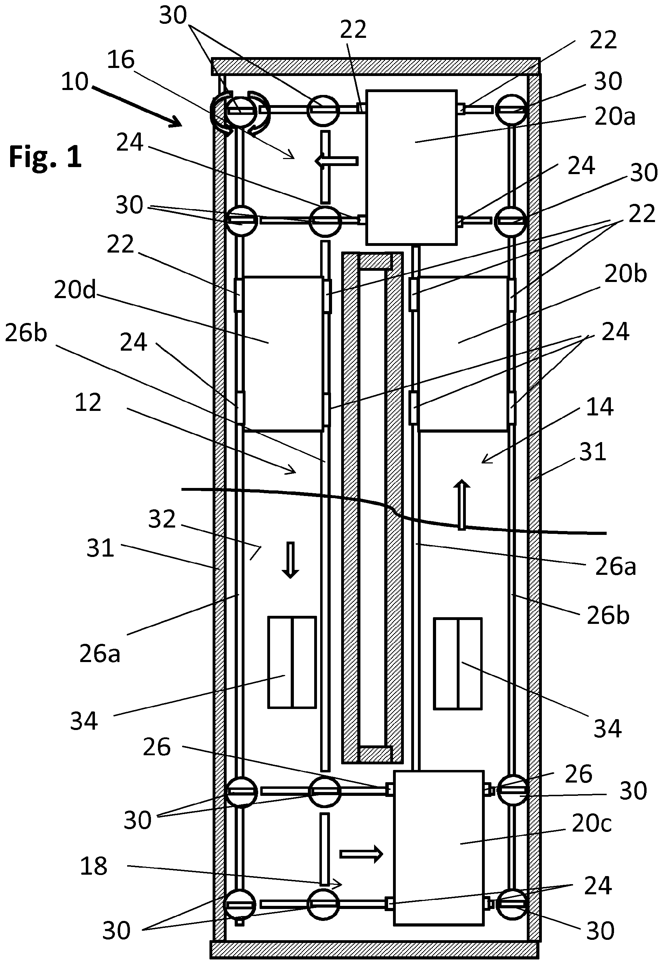

Fig. 1 shows an elevator 10 as an example of a passenger conveyor, having two vertical elevator shafts 12, 14 are at least at their upper and lower ends connected by horizontal shaft parts 16, 18 in which elevator cars 20a-20d are movable via linear motors. The linear motors are formed by upper movers 22 and lower movers 24 which are rotatably mounted, i.e. pivoted to the back side of the elevator cars, co-acting together with vertical stator rails 26a,b, horizontal stator rails 28a,b and with rotatable stator rails parts 30 which are rotatably mounted to a common back wall 32 of the vertical and horizontal shafts 12, 14, 16, 18. The vertical elevator shafts 12, 14 are usually located between shaft walls 31 of a building.

Via this arrangement of vertical stator rails 26a,b and horizontal stator rails 28a,b and the rotatable stator rail parts 30 located in between them, the elevator cars 20a-20d are able to move via their movers 22, 24 in the two elevator shafts 12, 14 and two horizontal elevator shaft parts 16, 18 in a trajectory path as indicated by the arrows. The advantage of such a solution is that no counterweights and no hoisting ropes are necessary which makes this basic concept very useful for high buildings as skyscrapers wherein the vertical length of the elevator shaft is more or less unlimited. A height limiting factor for conventional traction sheave elevators was the weight of the elevator ropes, which sum up in high shafts to a weight of tons. This restriction is not present in this linear motor based elevator concept.

With the reference number 34, landing doors are indicated which are preferably located in the common sidewall facing the viewer, i.e. opposite to the common back wall 32 where the stator rails 26a,b, 28a,b are mounted. But of course the landing doors could also be on the same back wall 32 or where the stator rails are mounted.

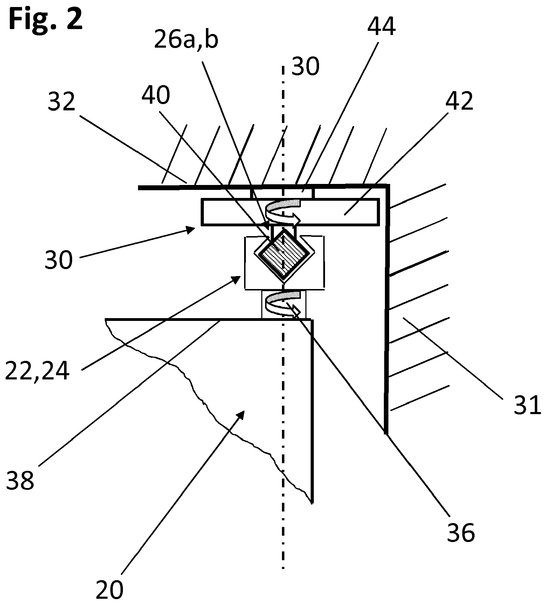

Fig. 2 shows the co-action of the rotatable stator parts 30 and the movers 22, 24 which are via a pivoted joint 36 rotatably mounted to a wall, particularly back wall or support structure 38 of the elevator car 20. The rotatable stator part 30 and the mover 22,24 are rotatable around a common rotation axis r. The rotatable rail part 30 comprises a rail section 40 which abuts in the vertical direction (as indicated) with the vertical stator rails 26a, 26b. The stator sections 40 are mounted to a rotating disc 42, which is optional, and a bearing 44 to the back wall 32 of the elevator shaft whereby preferably either the rotating disk 42 or the mover 22, 24 is driven with a rotation drive around the common rotation axis r. Thus, the whole arrangement of rotatable stator part and mover can be rotated with only one rotating drive. During the rotation, the linear motor is switched off so that the mover 22, 24 and the stator section 40 are via the magnetic force between the stator section and the mover 22, 24 fixedly attached to each other which keeps the car from moving during change of trajectory path. Accordingly, a brake for keeping the mover 22, 24 and the stator section 40 of the rotatable stator part 30 together is not necessary. After the whole arrangement has turned into the horizontal direction, the stator section 40 is now in line with the horizontal stator rails 28a, 28b and the mover 22, 24 can again be energized as to convey the elevator car 20a-d along the horizontal elevator shaft parts 16, 18.

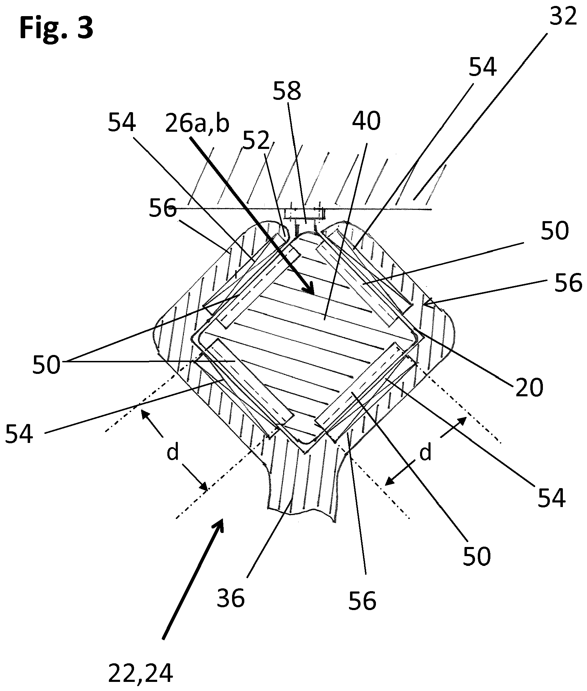

Fig. 3 shows a horizontal cross-section of the vertical stator rail 26a,b and the mover 22, 24. Accordingly, the vertical stator rail 26a,b comprises a stator beam 46 with square cross section having on its sides four stator faces 50 comprising stator teeth 52. The mover 22, 24 comprises active parts 54 located in a C-shaped mover housing 56 surrounding the stator beam 46, which active parts 54 face the corresponding stator faces 50 of the stator beam 46 as to generate an upwards directed propulsion force which is able to drive the elevator car 20a-d against the gravity force in upwards and downwards direction. The mover housing 56 together with the active mover parts 54 form the movers 22, 24 of the linear motors of the elevator. The mover housing 56 is via the pivot joint 36 mounted to a support structure 38 of the car 20. The stator beam 46 is supported with mountings 58 to the back wall 32 of the elevator shaft 12, 14, 16, 18. The physical properties of the four different stator phases 50 of the vertical stator rail 26a,b and the physical properties of the corresponding active mover parts 54 of the mover 24, 25 are identical.

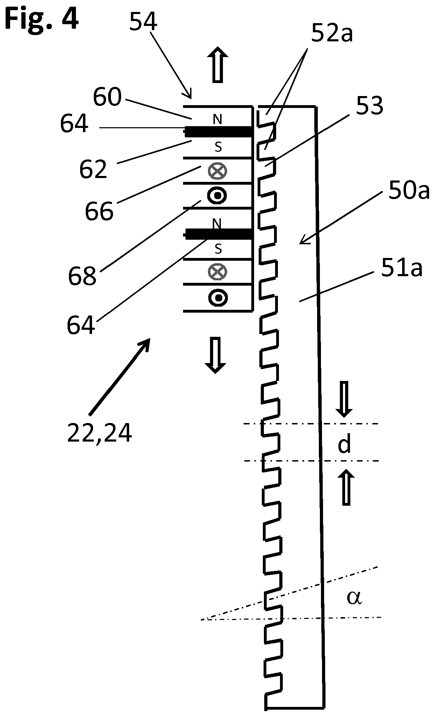

Preferably, in this arrangement, the stator teeth 52 are inclined downwards by an angle α as it is shown in Fig. 4. The tooth pitch is d in case of all stator faces 50. Between the stator teeth 52 of the stator face 50, gaps 53 are provided which are also identical on all four stator faces 50 of the vertical stator rail 26a,b. The active mover part 54 form together with the stator rails 26, 28 an FSPM motor. The active mover parts 54 each comprise successive packages with two mover irons 60, 62 between which one thin permanent magnet 64 is located. This arrangement of mover irons 60, 62 and permanent magnet 64 is followed by two windings 66, 68 which are controlled as to produce a magnetic field in opposite direction. This package comprising the succession 60, 62, 64, 68 of mover irons, permanent magnets and windings is successively repeated along to the length of the mover 22, 24. By this way, a very effective linear motor is formed which allows a good control of the car movement. Via the downwards inclination of the stator teeth 52 by the angle a, the pulling effect of the linear motor in upwards direction is increased so that this vertical stator rail is particularly adapted to compensate the gravitational force of the elevator car in downwards direction.

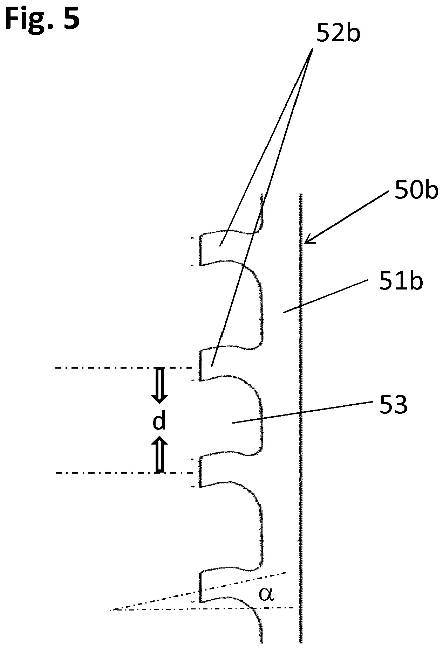

Fig. 5 shows a second embodiment of a stator rail wherein the stator face 50b comprises stator teeth 52b which are directed downwards by an angle α but additionally to Fig. 4 the centre line of the teeth 52 is curved. Also this stator rail leads to an increased pulling force of the linear motor in upwards direction thus being able to compensate for the force impact on the mover caused by the gravitational force of the elevator car and its load.

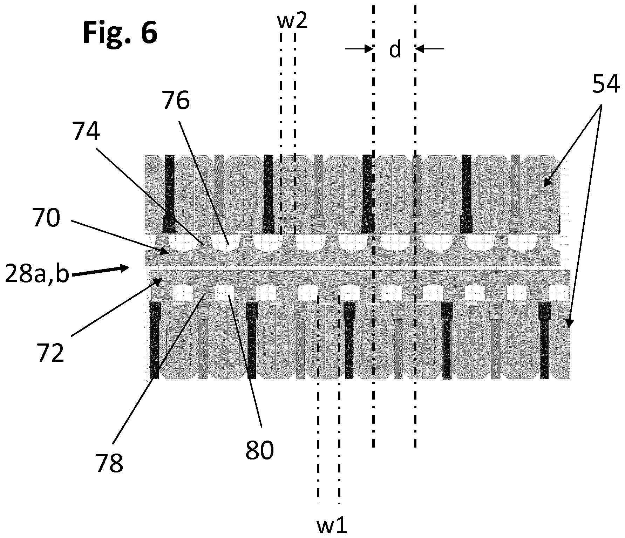

Fig. 6 shows in a vertical cross-section the two active mover parts 54 of a mover 22, 24 facing a horizontal stator rail 28a,b which consists of a separate upper stator rail part 70 and lower stator part 72 which are connected to each other, e.g. by welding or gluing or via bolts or similar connection methods. The upper stator part 70 comprises upper stator teeth 74 extending upwards which are separated by upper gaps 76 located between the upper stator teeth 74. The surface of the upper gaps 76 between the upper stator teeth 74 is smooth, i.e. differentiable as to reduce the harmonics during operation of the linear motor. The lower stator rail part 72 comprises lower stator teeth 78 extending downwards which are separated by lower air gaps 80. The pitch d of the upper stator teeth 74 is of course the same as the pitch of the lower stator teeth 78 and the same pitch as that of the vertical stator rails 26a,b. All stator teeth 74, 78 of the horizontal stator rail 28a,b extend normal to the stator rail 28a,b. Anyway, the lower stator teeth 78 have a larger width w1 than the upper stator teeth 74 which have a smaller width w2. Also the ratio between the tooth width and gap width is for the upper stator rail part 70 smaller than for the lower stator rail part 72. Thus, by this difference of the geometrical configuration of the upper and lower stator rail parts 70, 72 the attraction between the mover 22, 24 and the lower stator rail part 72 is essentially larger than the attraction between the upper active mover parts 54 and the upper stator rail part 70, thus compensating for the gravitational force of the loaded car acting on the mover 22, 24. Thus, the invention provides individualized vertical and horizontal stator rails 26a,b, 28a,b which consider the fact that the gravitational force acting on the car 20 and its load is acting parallel to the vertical stator rails while it is acting normally to the horizontal stator rails.

The invention is not limited to the disclosed embodiments but variations of the invention may be possible within the scope of the appended patent claims.

### List of reference numbers:

- 10: elevator - passenger conveyor
- 12: first (vertical) elevator shaft - first vertical trajectory
- 14: second (vertical) elevator shaft - second vertical trajectory
- 16: upper horizontal shaft part - first horizontal trajectory
- 18: lower horizontal shaft part - second horizontal trajectory
- 20: elevator car
- 22: upper car movers
- 24: lower car movers
- 26a,b: vertical stator rails
- 28a,b: horizontal stator rails
- 30: rotatable stator rail parts between the horizontal and vertical stator rails
- 31: elevator shaft walls
- 32: common back wall of all elevator shafts carrying the stator rails
- 34: landing doors
- 36: pivoted joint between the car and the mover
- 38: (back) wall or support structure of the elevator car for mounting the pivoted joint
- 40: stator section fixed to rotating disc of rotatable stator rail part
- 42: rotating disc
- 44: bearing for the rotating disc on the back wall of the elevator shaft
- 46: stator beam with square horizontal cross section having on its four side faces a stator face each
- 48: mountings for the stator beam to the back wall of the elevator shaft
- 50: stator face with stator poles/teeth
- 54: active mover parts of the mover facing the stator faces of the stator beam
- 56: mover housing carrying the active mover parts surrounding the stator beam
- 60: first mover iron of a package of the mover
- 62: second mover iron of a package of the mover
- 64: permanent magnet between the mover iron
- 66: first winding of a package of the mover
- 68: second winding of a package of the mover
- 70: upper stator rail part
- 72: lower stator rail part
- 74: upper stator teeth
- 76: upper gaps
- 78: lower stator teeth
- 80: lower gaps
- r: common rotation axis of rotatable stator part and mover
- d: pitch of the stator teeth
- α: angle of downwards inclination of the teeth of the vertical stator rails vs the horizontal plane
- w1: width of the lower teeth of the horizontal stator rail
- w2: width of the upper teeth of the horizontal stator rail

## Claims

1. An electric linear motor for a transport system, the electric linear motor being formed by at least one linear stator rail (26a,b, 28a,b) with stator poles (52; 74, 78) being located in a fixed correlation to an environment, and at least one mover (22, 24) co-acting and moving along the stator rail (26a,b, 28a,b), the linear stator rail (26a,b, 28a,b) comprising at least one horizontal stator rail (28a,b), having upper stator poles (74) extending upwards from the horizontal stator rail (28a,b) and lower stator poles (78) extending downwards from the horizontal stator rail (28a,b), **characterized in that** at least one of the physical characteristic of the upper stator poles (74) differs from that of the lower stator poles (78).

2. Motor according to claim 1, wherein width and/or height and / or length (d) of the upper stator poles (74) is lower than the width and/or height and / or length (d) of the lower stator poles (78).

3. Motor according to any of the preceding claims, wherein the material of the upper stator poles (74) differs from that of the lower stator poles(78).

4. Motor according to claim 3, **characterized in that** wherein the material of the upper stator poles (74) is less ferromagnetic than the material of the lower stator poles (78).

5. Motor according to any of the preceding claims, wherein the stator poles (74, 78) are spaced apart stator teeth made of iron and/or a permanent magnetic material.

6. Motor according to any of the preceding claims, wherein the horizontal stator rail (28a,b) comprises upper gaps (76) between the upper stator poles (74) and lower gaps (80) between the lower stator poles(78), **characterized in that** the width ratio between the upper stator poles (74) and the upper gaps (76) is lower than the width ratio between the lower stator poles (78) and the lower gaps (80).

7. Motor according to claim 6, wherein the width ratio between upper stator poles (74) and upper gaps (76) is between 0,2 and 0,6, preferably between 0,3 and 0,5.

8. Motor according to claim 6 or 7, wherein the width ratio between the lower stator poles (78) and the lower gaps (80) is between 0,7 and 1,5, preferably between 0,8 and 1,2.

9. Motor according to one of the preceding claims, **characterized in** the vertical cross section the surface between the upper stator poles (74) forming the upper gaps is smooth, i.e. is differentiable.

10. Motor according to one of the preceding claims, wherein the width of the upper stator poles (74) is between 5 and 10 mm, particularly between 6 and 9 mm.

11. Motor according to one of the preceding claims, wherein the width of the lower stator poles (78) is between 10 and 15 mm, particularly between 11 and 13 mm.

12. Motor according to one of the preceding claims, wherein the horizontal stator rail (26a,b, 28a,b) is formed of a separate upper stator rail part (70) comprising the upper stator poles/teeth (74) and a separate lower stator rail part (72) comprising the lower stator poles/teeth (78), which upper and lower stator rail parts (70, 72) are connected to each other.

13. Elevator comprising at least one linear motor, wherein the at least one stator rail (26a,b, 28a,b) of the linear motor defining horizontal and vertical trajectories (12, 14, 16, 18) of an elevator car (20a-d), which trajectories comprise at least one vertical portion (12, 14) and at least one horizontal portion (16, 18), wherein the linear motor of the horizontal portion corresponds to any of claims 1 to 12.

14. Elevator according to claim 13, wherein the vertical stator rail (26a,b, 28a,b) of the vertical portion (12, 14) has stator poles (52) extending in different horizontal directions, whereby the physical properties of the stator poles (52) extending in different direction are identical.

15. Escalator or moving ramp comprising at least one linear motor, wherein the at least one stator rail of the linear motor comprises a horizontal stator rail defining a horizontal trajectory of an endless conveyor element comprising pallets, and wherein the at least one stator rail optionally comprises an inclined stator rail in an inclined trajectory extending in an angle obtus with respect to the horizontal stator rail, wherein at least the linear motor of the horizontal trajectory corresponds to any of claims 1 to 12.

16. Escalator according to claim 15, wherein the linear motor in the horizontal trajectory and the linear motor in the inclined trajectory correspond to any of claims 1 to 12, and wherein preferably the difference between the physical properties of the upper and lower poles in the inclined stator rail depends on the angle between the horizontal and the inclined stator rail.

## Amended claims

### Amended claims in accordance with Rule 137(2) EPC.

1. An electric linear motor for a transport system, the electric linear motor being formed by at least one linear stator rail (26a,b, 28a,b) with stator poles (52; 74, 78) being located in a fixed correlation to an environment, and at least one mover (22, 24) co-acting and moving along the stator rail (26a,b, 28a,b), the linear stator rail (26a,b, 28a,b) comprising at least one horizontal stator rail (28a,b), having upper stator poles (74) extending upwards from the horizontal stator rail (28a,b) and lower stator poles (78) extending downwards from the horizontal stator rail (28a,b), **characterized in that** at least one of the physical characteristic of the upper stator poles (74) differs from that of the lower stator poles (78), **characterized in that** the stator poles (74, 78) are spaced apart stator teeth made of iron.

2. Motor according to claim 1, wherein width and/or height and / or length (d) of the upper stator poles (74) is lower than the width and/or height and / or length (d) of the lower stator poles (78).

3. Motor according to any of the preceding claims, wherein the material of the upper stator poles (74) differs from that of the lower stator poles(78).

4. Motor according to claim 3, **characterized in that** wherein the material of the upper stator poles (74) is less ferromagnetic than the material of the lower stator poles (78).

5. Motor according to any of the preceding claims, wherein the stator poles (74, 78) are spaced apart stator teeth made of a permanent magnetic material.

6. Motor according to any of the preceding claims, wherein the horizontal stator rail (28a,b) comprises upper gaps (76) between the upper stator poles (74) and lower gaps (80) between the lower stator poles(78), **characterized in that** the width ratio between the upper stator poles (74) and the upper gaps (76) is lower than the width ratio between the lower stator poles (78) and the lower gaps (80).

7. Motor according to claim 6, wherein the width ratio between upper stator poles (74) and upper gaps (76) is between 0,2 and 0,6, preferably between 0,3 and 0,5.

8. Motor according to claim 6 or 7, wherein the width ratio between the lower stator poles (78) and the lower gaps (80) is between 0,7 and 1,5, preferably between 0,8 and 1,2.

9. Motor according to one of the preceding claims, **characterized in** the vertical cross section the surface between the upper stator poles (74) forming the upper gaps is smooth, i.e. is differentiable.

10. Motor according to one of the preceding claims, wherein the width of the upper stator poles (74) is between 5 and 10 mm, particularly between 6 and 9 mm.

11. Motor according to one of the preceding claims, wherein the width of the lower stator poles (78) is between 10 and 15 mm, particularly between 11 and 13 mm.

12. Motor according to one of the preceding claims, wherein the horizontal stator rail (26a,b, 28a,b) is formed of a separate upper stator rail part (70) comprising the upper stator poles/teeth (74) and a separate lower stator rail part (72) comprising the lower stator poles/teeth (78), which upper and lower stator rail parts (70, 72) are connected to each other.

13. Elevator comprising at least one linear motor, wherein the at least one stator rail (26a,b, 28a,b) of the linear motor defining horizontal and vertical trajectories (12, 14, 16, 18) of an elevator car (20a-d), which trajectories comprise at least one vertical portion (12, 14) and at least one horizontal portion (16, 18), wherein the linear motor of the horizontal portion corresponds to any of claims 1 to 12.

14. Elevator according to claim 13, wherein the vertical stator rail (26a,b, 28a,b) of the vertical portion (12, 14) has stator poles (52) extending in different horizontal directions, whereby the physical properties of the stator poles (52) extending in different direction are identical.

15. Escalator or moving ramp comprising at least one linear motor, wherein the at least one stator rail of the linear motor comprises a horizontal stator rail defining a horizontal trajectory of an endless conveyor element comprising pallets, and wherein the at least one stator rail optionally comprises an inclined stator rail in an inclined trajectory extending in an angle obtus with respect to the horizontal stator rail, wherein at least the linear motor of the horizontal trajectory corresponds to any of claims 1 to 12.

16. Escalator according to claim 15, wherein the linear motor in the horizontal trajectory and the linear motor in the inclined trajectory correspond to any of claims 1 to 12, and wherein preferably the difference between the physical properties of the upper and lower poles in the inclined stator rail depends on the angle between the horizontal and the inclined stator rail.
